# EUROPEAN PATENT SPECIFICATION

(11) **EP 3 422 772 B1**
(45) Date of publication and mention of the grant of the patent: **29.07.2020**
(21) Application number: 16893913.0
(22) Date of filing: 17.03.2016
(51) Int. Cl.: H04W 48/00, H04W 48/12, H04B 10/116

(54) **BEACON TRANSMISSION METHOD AND DEVICE**
BAKENSENDEVERFAHREN UND -VORRICHTUNG
PROCÉDÉ ET DISPOSITIF DE TRANSMISSION DE BALISE

(43) Date of publication of application: 02.01.2019
(73) Proprietor: Huawei Technologies Co., Ltd., Longgang District Shenzhen, Guangdong 518129 (CN)
(72) Inventor: JIANG, Tong, Shenzhen Guangdong 518129 (CN); DONG, Chen, Shenzhen Guangdong 518129 (CN); LI, Qiang, Shenzhen Guangdong 518129 (CN)
(74) Representative: Pfenning, Meinig & Partner mbB
(86) International application number: PCT/CN2016/076601
(87) International publication number: WO 2017/156748

(56) References cited:
- CN-A- 1 918 849
- CN-A- 101 421 981
- CN-A- 101 998 530
- US-A1- 2005 169 292
- US-A1- 2013 216 233
- US-A1- 2013 235 813
- US-A1- 2015 238 082
- Shao ET AL: "Solutions and discussions to direct and indirect beacon conflict problem for IEEE 802.15.4b", IEEE 802. 15-04-0457-01-004b, 1 September 2004 (2004-09-01), pages 1-23, XP055422193, Retrieved from the Internet: URL:https://mentor.ieee.org/802.15/file/04 /15-04-0457-01-004b-solutions-and-discussi ons-to-direct-and-indirect-beacon-conflict -problem-ieee-802-15-4b.ppt [retrieved on 2017-11-07]
- LI QIANG ET AL: "General considerations and proposals for high rate PD communications ; 15-16-0028-01-007a-general-considerations- and-proposals-for-high-rate-pd-communicati ons", IEEE DRAFT; 15-16-0028-01-007A-GENERAL-CONSIDERATIONS- AND-PROPOSALS-FOR-HIGH-RATE-PD-COMMUNICATI ONS, IEEE-SA MENTOR, PISCATAWAY, NJ USA, vol. 802.15.7r1, no. 1, 13 January 2016 (2016-01-13), pages 1-15, XP068105506, [retrieved on 2016-01-13]
- N/A: "Dynamic Beacon Alignment For Sops ; 15-04-0135-00-0005-dynamic-beacon-alignmen t-for-sops", IEEE DRAFT; 15-04-0135-00-0005-DYNAMIC-BEACON-ALIGNMEN T-FOR-SOPS, IEEE-SA MENTOR, PISCATAWAY, NJ USA, vol. 802.155, 15 September 2004 (2004-09-15), pages 1-15, XP017671417, [retrieved on 2004-09-15]
- SHAO, HUAIRONG ET AL.: 'Solutions and discussions to direct and indirect beacon conflict problem for IEEE 802.15.4b' vol. 802, 07 September 2004, pages 4 - 23, XP055422193

## Description

### TECHNICAL FIELD

This application relates to the field of optical communications technologies, and in particular, to a beacon sending method and apparatus and a network access method and apparatus.

### BACKGROUND

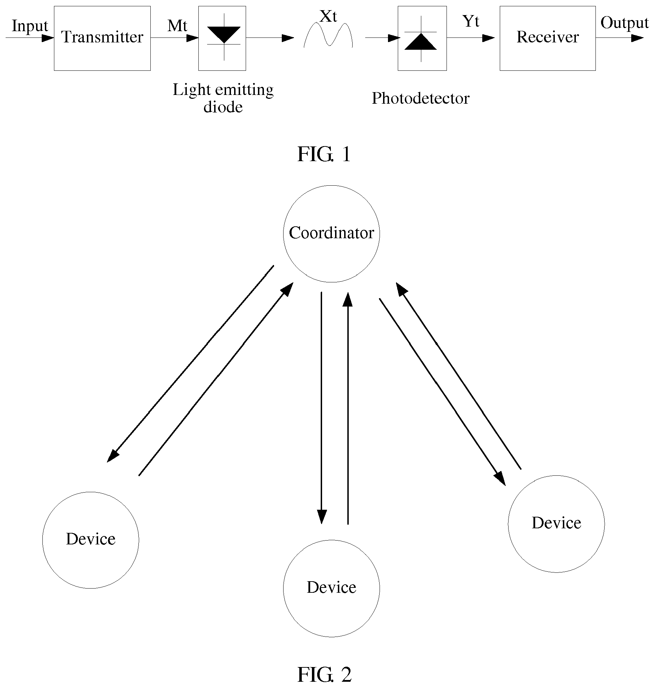

Visible light communication (English: Visible Light Communication, VLC for short) is a manner of communication by using visible light spectra (380 nm to 780 nm), and a signal is mainly transmitted by modulating intensity of a light emitting diode (English: Light Emitting Diode, LED for short) light source. As shown in FIG. 1, FIG. 1 is a schematic diagram of a visible light communication system. At an input end, a transmitter encodes and modulates a to-be-transmitted data signal, and modulates intensity of an LED light source by using the encoded and modulated data signal (namely, Mt), to generate a light intensity modulated signal (namely, Xt). At a receive end, a photodetector (English: Photodetector) or an optical camera (English: Optical Camera) detects the received light intensity modulated signal, converts the received light intensity modulated signal into an electrical signal (namely, Yt), and inputs the converted electrical signal to a receiver. The receiver demodulates and decodes the electrical signal, and restores and outputs the transmitted data signal.

The Institute of Electrical and Electronics Engineers (English: Institute of Electrical and Electronics Engineers, IEEE for short) released the IEEE 802.15.7 standard in 2011. The standard is applicable to visible light communication. A network in the IEEE 802.15.7 is referred to as a visible light communication personal area network (English: Visible light communication personal area network, VPAN for short). Each VPAN includes one serving node, referred to as a coordinator, configured to manage running of the VPAN. The coordinator may be located at an LED light source. FIG. 2 shows a topology of a common star (English: star) VPAN. In this network, one coordinator provides network access services for a plurality of devices (English: device) in the network.

The IEEE 802.15.7 standard supports two working modes: a beacon-enabled (English: Beacon-enabled) VPAN and a non-beacon enabled (English: Non-Beacon enabled) VPAN.

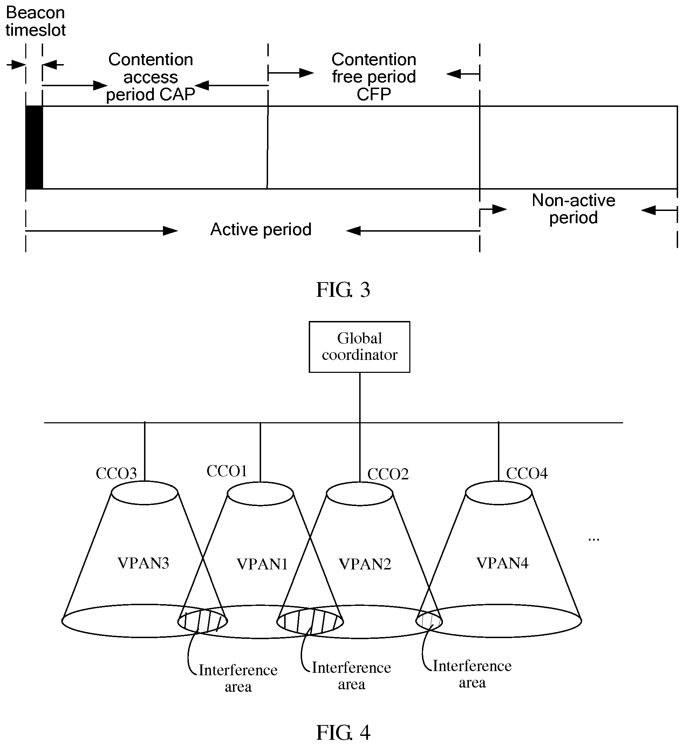

In the beacon-enabled VPAN, a coordinator periodically sends a beacon (English: beacon). A beacon sending timeslot (or referred to as a beacon timeslot) periodically occupies a start position of each super frame. A structure of a super frame is shown in FIG. 3. A super frame includes an active period and an inactive period. The active period includes a beacon timeslot used to send a beacon, a contention access period (English: Contention Access Period, CAP for short), and a contention free period (English: Contention Free Period, CFP for short). The beacon timeslot is located at a start position of the super frame, and is used by the coordinator to send a beacon. Some common information of a network, for example, an identification (English: Identification) of the network, a length of the super frame, and the like is carried in the beacon.

Considering that mutual interference may exist between different VPANs during actual deployment of a VLC system, the industry has started studying interference coordination between different VPANs, to improve communication performance. A centralized interference coordination mode has gained relatively much attention. As shown in FIG. 4, a global coordinator is responsible for management and coordination of a plurality of VPANs (which, for example, are represented by using VPAN1, VPAN2, VPAN3, and VPAN4). The VPANs have respective coordinators (which, for example, are represented by using CCO1, CCO2, CCO3, and CCO4) performing management (for example, bandwidth allocation) on the respective VPANs.

During initial setup of any VPAN, it is ensured, by using the global coordinator, that a start position and an end position of each super frame of the VPAN are respectively aligned with start positions and end positions of corresponding super frames of other VPANs. Because the global coordinator may not learn a possible interference status of the VPANs, the global coordinator does not perform interference coordination during initial setup of the VPANs. To avoid a waste of a bandwidth resource, during initial setup of a VPAN, coordinators in the VPANs send beacons by occupying a same beacon timeslot, and the global coordinator coordinates the beacon timeslot and resource allocation after obtaining interference-related information of the VPANs from the coordinators in the VPANs.

In the beacon-enabled VPAN, when a device needs to access a network, the device first needs to perform channel scanning, listens to, in a time period, beacons that are periodically sent by nearby coordinators, measures channel quality based on the received beacons, and selects and accesses a VPAN corresponding to a beacon having best measured channel quality.

However, because during initial networking, the coordinators in different VPANs send beacons by occupying the same beacon timeslot, when a device in an interference area of two VPANs interfering with each other receives beacons that are simultaneously sent by coordinators in the two VPANs interfering with each other, the device possibly cannot correctly detect and decode the two received beacons and consequently cannot access a network normally.

For example, as shown in FIG. 4, an overlapping area between VPAN1 and VPAN2 is an interference area of the two VPANs. Because currently, no accessing device works in the interference area of the two VPANs, the global coordinator does not need to perform interference coordination for the interference area. If a device located in the interference area of the two VPANs attempts to access a network at the moment, the device cannot correctly detect a beacon due to interference and consequently cannot access the network normally.

A US patent application US 2013/235813 A1 discloses an approach for managing a wireless network access point beacon. The approach involves a determination to cause the adjustment of the beacon schedule is based, at least in part, on a received indication of a potential conflict be-tween the beacon and the one or more beacons. A IEEE draft (Shao ET AL: "Solutions and discussions to direct and indirect beacon conflict problem for IEEE 802.15.4b", IEEE 802. 15-04-0457-01-004b, 1 September 2004 ) discloses direct and indirect beacon conflict problems and solutions. The solutions comprise a reactive solution and a proactive solution. Another IEEE draft (LI QIANG ET AL: "General considerations and proposals for high rate PD communications; vol. 802.15.741, no. 1, 13 January 2016) provides some general considerations and proposals in a VPAN, which includes system architecture, association, data transfer, channel access, VPAN maintenance, mobility management and interference management.

### SUMMARY

This application provides a beacon sending method and apparatus and a network access method and apparatus, to resolve a problem that when no interference coordination is performed for at least two VPANs interfering with each other, if a device in an interference area attempts to access a network, the device cannot correctly detect a beacon and consequently cannot access a network normally. The invention is set out in the appended set of claims. The further examples called embodiments in the description are illustrative examples and not embodiments claimed in the present application.

According to a first aspect, a beacon sending method is provided. The method includes: sending, by a coordinator, a beacon, where the beacon occupies a first beacon timeslot in a current super frame; receiving, by the coordinator, a first beacon request frame, where the first beacon request frame is used to indicate that a device is located in an interference area between an area of a first network in which the coordinator is located and an area of at least one second network; and continuing, by the coordinator, to send beacons, where the following condition is satisfied: a first beacon timeslot and a second beacon timeslot in each of N super frames starting from a next super frame are separately occupied, N≥1, and N is a positive integer. Although this application is described by using the first network and the second network as an example, persons skilled in the art may understand that the first network and the second network may both belong to a larger network. In this way, when the beacon request frame sent by the device is received, beacons are sent at least twice in one super frame, so that the device can correctly detect a beacon in a timely manner, a probability that the device correctly detects a beacon is increased, and the device can normally access a network.

With reference to the first aspect, in a first possible implementation of the first aspect, the first beacon timeslot and the second beacon timeslot are both located in a beacon timeslot area of the super frame, the second beacon timeslot is an idle timeslot, the beacon timeslot area is a time period that is merely used to send a beacon in the super frame, and the idle timeslot is a timeslot that is in the beacon timeslot area and that is not used to send beacons by coordinators in VPANs interfering with each other; or the first beacon timeslot is located in a beacon timeslot area of the super frame, and the second beacon timeslot is located in a CFP area of the super frame.

With reference to the first aspect or the first possible implementation of the first aspect, in a second possible implementation of the first aspect, a beacon type added by the coordinator to a beacon sent by occupying the first beacon timeslot is an original beacon; a beacon type added by the coordinator to a beacon sent by occupying the second beacon timeslot is an additional beacon; and the original beacon is used to indicate that the beacon is a beacon periodically and conventionally sent by the coordinator, and the additional beacon is used to indicate that the beacon is an extra beacon sent by the coordinator other than the original beacon.

With reference to the second possible implementation of the first aspect, in a third possible implementation of the first aspect, after the coordinator sends the beacon by separately occupying the first beacon timeslot and the second beacon timeslot in each of the N super frames, the method further includes: establishing, by the coordinator, association with the device if the coordinator receives an association request frame sent by the device, and an occupation time of the N super frames does not reach a specified threshold; and if the coordinator does not receive an association request frame sent by the device, and the occupation time of the N super frames reaches the specified threshold, sending, by the coordinator, the beacons by occupying only a first beacon timeslot in each super frame following the N super frames. In this way, a resource of the second beacon timeslot can be released in time when the device cannot detect an additional beacon by using the second beacon timeslot, thereby avoiding a resource waste.

With reference to the third possible implementation of the first aspect, in a fourth possible implementation of the first aspect, the association request frame carries a beacon type indication, and the beacon type indication is used to represent an association request that is initiated by the device after the device detects an original beacon, or is used to represent an association request that is initiated by the device after the device detects an additional beacon; and after the coordinator receives the association request frame sent by the device, if the coordinator determines, based on the beacon type indication carried in the association request frame, that the association request frame is an association request that is initiated by the device after the device detects an original beacon, the coordinator skips triggering interference coordination; or if the coordinator determines that the association request frame is an association request that is initiated by the device after the device detects an additional beacon, the coordinator triggers interference coordination. In this way, interference coordination can be performed in a timely manner when it is determined, based on indication information of the device in the association request frame, that interference coordination needs to be performed, thereby ensuring that other devices normally access a network subsequently, and improving performance of a network system including a plurality of VPANs.

With reference to the fourth possible implementation of the first aspect, in a fifth possible implementation of the first aspect, during a process of triggering the interference coordination, the coordinator uses an interference parameter carried in the association request frame.

With reference to any one of the third to the fifth possible implementations of the first aspect, in a sixth possible implementation of the first aspect, if the first beacon timeslot is located in the beacon timeslot area of the super frame, and the second beacon timeslot is located in the CFP area of the super frame, after the coordinator sends the beacon by separately occupying the first beacon timeslot and the second beacon timeslot in each of the N super frames, the method further includes: if the coordinator receives a second beacon request frame sent by the device, and the occupation time of the N super frames does not reach the specified threshold, sending, by the coordinator, the beacon by separately occupying the first beacon timeslot and a third beacon timeslot in each super frame following the N super frames, where the third beacon timeslot is located in a CFP area. Therefore, a problem that beacon interference occurs again due to a conflict in the second beacon timeslot is resolved.

With reference to any one of the first aspect and the first to the sixth possible implementations of the first aspect, in a seventh possible implementation of the first aspect, the first beacon request frame carries a field that indicates an address of the device, and a format of the second beacon request frame is the same as a format of the first beacon request frame.

With reference to the seventh possible implementation of the first aspect, in an eighth possible implementation of the first aspect, the first beacon request frame further carries at least one of a field indicating a request reason, a field indicating a sequence number of sending the beacon request frame, a field indicating a quantity of times of retransmitting the beacon request frame, and a field indicating an address of a target access coordinator.

According to a second aspect, a network access method is provided. The method includes: performing, by a device, beacon detection before accessing a first network; and sending a first beacon request frame if the device cannot correctly detect a beacon when a detection time reaches a specified first duration threshold, where the first beacon request frame is used to indicate that the device is in an interfered state. The interfered state is used to indicate that the device is located in an area in which different networks interfere with each other.

In this way, when the device cannot correctly detect a beacon and consequently cannot access a network, the device actively sends a beacon request frame, to instruct a coordinator to perform related processing, thereby increasing a probability that the device correctly accesses a network.

With reference to the second aspect, in a first possible implementation of the second aspect, the method further includes: continuing, by the device, to perform beacon detection; if the device correctly detects a beacon before a detection continuation time reaches a specified second duration threshold, and determines that the detected beacon is sent by a coordinator in the first network, sending an association request frame to the coordinator in the first network, where the association request frame is used to request for association with the coordinator in the first network; or if the device does not correctly detect a beacon yet when a detection continuation time reaches the specified second duration threshold, sending a second beacon request frame to a coordinator in the first network, where the second beacon request frame is used to indicate that the device still is in the interfered state. The interfered state indicates that the device is located in an area in which different networks interfere with each other. In this way, the device continues to send a beacon request frame, and when the device still cannot correctly detect a beacon, the device instructs the coordinator in a timely manner to perform corresponding processing, thereby ensuring that the device can correctly detect a beacon, and can normally access a network.

With reference to the first possible implementation of the second aspect, in a second possible implementation of the second aspect, after the device correctly detects the beacon, the method further includes: parsing, by the device, the detected beacon, and determining a beacon type included in the beacon, where the beacon type is an original beacon or an additional beacon, and the original beacon is used to indicate that the beacon is a beacon periodically and conventionally sent by the coordinator, and the additional beacon is used to indicate that the beacon is an extra beacon sent by the coordinator other than the original beacon.

With reference to the second possible implementation of the second aspect, in a third possible implementation of the second aspect, after the determining, by the device, a beacon type included in the beacon, the method further includes: if the device determines that the beacon type included in the beacon is an original beacon, adding, by the device to the association request frame sent to the coordinator in the first network, a beacon type indication used to indicate that an association request is initiated by the device after the device detects the original beacon; or if the device determines that the beacon type included in the beacon is an additional beacon, adding, by the device to the association request frame sent to the coordinator in the first network, a beacon type indication used to indicate that an association request is initiated by the device after the device detects the additional beacon.

With reference to the third possible implementation of the second aspect, in a fourth possible implementation of the second aspect, the device further performs interference parameter detection during a process of the beacon detection; and if the device determines that the beacon type included in the beacon is an additional beacon, the device further adds a detected interference parameter to the association request frame sent to the coordinator in the first network.

With reference to any one of the first to the fourth possible implementations of the second aspect, in a fifth possible implementation of the second aspect, the first beacon request frame carries a field that indicates an address of the device, and a format of the second beacon request frame is the same as a format of the first beacon request frame.

With reference to the fifth possible implementation of the second aspect, in a sixth possible implementation of the second aspect, the first beacon request frame further carries at least one of a field indicating a request reason, a field indicating a sequence number of sending the beacon request frame, a field indicating a quantity of times of retransmitting the beacon request frame, and a field indicating an address of a target access coordinator.

According to a third aspect, a network access method is provided. The method includes: performing, by a device, network detection before accessing a first network, where the network detection includes beacon detection and interference parameter detection; and sending, by the device, an interference indication frame to a coordinator in the first network if the device cannot correctly detect a beacon when a detection time reaches a specified first duration threshold, where the interference indication frame carries a detected interference parameter of the first network and at least one second network.

In this way, when determining that the device cannot correctly detect a beacon, the device sends the interference indication frame in a timely manner, so that the coordinator can trigger an interference coordination process in a timely manner, the device can access a network as soon as possible after the interference coordination, it is ensured that other devices can correctly detect beacons and normally access the network subsequently, and performance of a network system including a plurality of VPANs is improved.

With reference to the third aspect, in a first possible implementation of the third aspect, the interference parameter includes identification information of the first network and the second network, and quality of a signal of the first network and a signal of the at least one second network that are received by the device.

According to a fourth aspect, a network access method is provided. The method includes: receiving, by a coordinator in a first network, an interference indication frame sent by a device, where the interference indication frame carries an interference parameter, and the interference parameter refers to interference information indicating that at least one second network interferes with the first network; and triggering, by the coordinator, interference coordination based on the interference indication frame.

In this way, when receiving the interference indication frame sent by the device, the coordinator can trigger an interference coordination process in a timely manner, so that the device can access a network as soon as possible after the interference coordination, it is ensured that other devices can correctly detect beacons and normally access the network subsequently, and performance of a network system including a plurality of VPANs is improved.

With reference to the fourth aspect, in a first possible implementation of the fourth aspect, the interference parameter includes identification information of the first network and identification information of the at least one second network, and/or information about quality of a signal of the first network and a signal of the at least one second network that are received by the device.

With reference to the fourth aspect or the first possible implementation of the fourth aspect, in a second possible implementation of the fourth aspect, the triggering, by the coordinator, interference coordination includes: sending, by the coordinator, an interference coordination request message to a global coordinator managing the coordinator, where the interference coordination request message includes the interference parameter; receiving, by the coordinator, an interference coordination response message returned by the global coordinator, where the interference coordination response message includes a beacon timeslot used for the coordinator to send a beacon; and sending, by the coordinator, based on the interference coordination response message, a beacon by occupying the beacon timeslot indicated by the global coordinator.

According to a fifth aspect, a beacon sending apparatus is provided. The beacon sending apparatus has a function of implementing the method design in any one of the first aspect and the first to the eighth possible implementations of the first aspect. The function may be implemented by hardware, or may be implemented by hardware executing corresponding software. The hardware or software includes one or more modules corresponding to the foregoing function.

With reference to the fifth aspect, in a first possible implementation of the fifth aspect, the beacon sending apparatus may be a coordinator.

With reference to the first possible implementation of the fifth aspect, in a second possible implementation of the fifth aspect, a structure of the coordinator includes a transceiver, a memory, and a processor. The memory is configured to store a group of programs. The transceiver is configured to send a beacon, where the beacon occupies a first beacon timeslot in a current super frame; and configured to receive a first beacon request frame, where the first beacon request frame is used to indicate that a device is located in an interference area between an area of a first network in which the coordinator is located and an area of at least one second network. The processor is configured to invoke the programs stored in the memory, to perform the following operation: after the transceiver receives the first beacon request frame, determining to send a beacon by separately occupying a first beacon timeslot and a second beacon timeslot in each of N super frames starting from a next super frame. The transceiver is further configured to: under control of the processor, separately occupy the first beacon timeslot and the second beacon timeslot in each of the N super frames in the N super frames starting from the next super frame, to send the beacons.

In this way, when the beacon request frame sent by the device is received, beacons are sent at least twice in one super frame, so that the device can correctly detect a beacon in a timely manner, a probability that the device correctly detects a beacon is increased, and the device can normally access a network.

With reference to the second possible implementation of the fifth aspect, in a third possible implementation of the fifth aspect, the processor is further configured to invoke the programs stored in the memory, to enable the coordinator to perform the method in any one of the first to the eighth possible implementations of the first aspect.

According to a sixth aspect, a network access apparatus is provided. The network access apparatus has a function of implementing the method design in any one of the second aspect and the first to the sixth possible implementations of the second aspect. The function may be implemented by hardware, or may be implemented by hardware executing corresponding software. The hardware or software includes one or more modules corresponding to the foregoing function.

With reference to the sixth aspect, in a first possible implementation of the sixth aspect, the network access apparatus may be a device in a network. A structure of the device in the network includes a transceiver, a memory, and a processor. The memory is configured to store a group of programs. The processor is configured to invoke the programs stored in the memory, to perform the following operations: performing beacon detection before the network access apparatus accesses a first network; and controlling the transceiver to send a first beacon request frame if the network access apparatus cannot correctly detect a beacon when a detection time reaches a specified first duration threshold, where the first beacon request frame is used to indicate that the device is in an interfered state. The transceiver is configured to send the first beacon request frame under control of the processor.

In this way, when the device cannot correctly detect a beacon and consequently cannot access a network, the device actively sends a beacon request frame, to instruct a coordinator to perform related processing, thereby increasing a probability that the device correctly accesses a network.

With reference to the first possible implementation of the sixth aspect, in a second possible implementation of the sixth aspect, the processor is further configured to invoke the programs stored in the memory, to enable the device to perform the method in any one of the first to the sixth possible implementations of the second aspect.

According to a seventh aspect, a network access apparatus is provided. The network access apparatus has a function of implementing the method design in the third aspect or the first possible implementation of the third aspect. The function may be implemented by hardware, or may be implemented by hardware executing corresponding software. The hardware or software includes one or more modules corresponding to the foregoing function.

With reference to the seventh aspect, in a first possible implementation of the seventh aspect, the network access apparatus may be a device in a network. A structure of the device in the network includes a transceiver, a memory, and a processor. The memory is configured to store a group of programs. The processor is configured to invoke the programs stored in the memory, to perform the following operations: performing network detection before the network access apparatus accesses a first network, where the network detection includes beacon detection and interference parameter detection; and instructing the transceiver to send an interference indication frame to a coordinator in the first network when the device cannot correctly detect a beacon yet when a detection time reaches a specified first duration threshold, where the interference indication frame carries a detected interference parameter of the first network and at least one second network. The transceiver is configured to send the interference indication frame to the coordinator in the first network under instruction of the processor.

With reference to the first possible implementation of the seventh aspect, in a second possible implementation of the seventh aspect, the processor is further configured to invoke the programs stored in the memory, to enable the device to perform the method in the first possible implementation of the third aspect.

According to an eighth aspect, a network access apparatus is provided. The network access apparatus has a function of implementing the method design in any one of the fourth aspect and the first to the second possible implementations of the fourth aspect. The function may be implemented by hardware, or may be implemented by hardware executing corresponding software. The hardware or software includes one or more modules corresponding to the foregoing function.

With reference to the eighth aspect, in a first possible implementation of the eighth aspect, the network access apparatus may be a coordinator. A structure of the coordinator includes a transceiver, a memory, and a processor. The transceiver is configured to receive an interference indication frame sent by a device, where the interference indication frame carries an interference parameter, and the interference parameter refers to interference information indicating that at least one second network interferes with the first network. The memory is configured to store a group of programs. The processor is configured to invoke the programs stored in the memory, to perform the following operation: triggering interference coordination based on the interference indication frame received by the transceiver.

With reference to the first possible implementation of the eighth aspect, in a second possible implementation of the eighth aspect, the processor is further configured to invoke the programs stored in the memory, to enable the coordinator to perform the method in either of the first and the second possible implementations of the fourth aspect.

In the solutions provided in the embodiments of this application, when the device cannot correctly detect a beacon due to beacon interference and consequently cannot normally access a network, a beacon timeslot is added, and beacons are sent at least twice in one super frame, so that the device can correctly detect a beacon in a timely manner, and normally access a network. In addition, interference coordination can be performed in a timely manner when it is determined, based on the indication information of the device in the association request frame, that interference coordination needs to be performed, thereby ensuring that other devices normally access the network subsequently, and improving performance of a network system including a plurality of VPANs.

### BRIEF DESCRIPTION OF DRAWINGS

FIG. 1 is a schematic diagram of a visible light communication system in the prior art;
FIG. 2 is a schematic topological diagram of a star VPAN in the prior art;
FIG. 3 is a schematic structural diagram of a super frame in the prior art;
FIG. 4 is a system architectural diagram of a centralized interference coordination mode in the prior art;
FIG. 5 is a schematic diagram of a correspondence between beacon timeslots in super frames during initial setup of VPANs according to an embodiment of this application;
FIG. 6 is a schematic diagram of a correspondence between beacon timeslots after interference coordination is performed for VPANs according to an embodiment of this application;
FIG. 7 is a first flowchart of a method according to an embodiment of this application;
FIG. 8 is a first schematic diagram of a super frame after a second beacon timeslot is added according to an embodiment of this application;
FIG. 9 is a second schematic diagram of a super frame after a second beacon timeslot is added according to an embodiment of this application;
FIG. 10 is a second flowchart of a method according to an embodiment of this application;
FIG. 11a and FIG. 11b are schematic structural diagrams of a beacon sending apparatus according to an embodiment of this application;
FIG. 12 is a first structural diagram of a network access apparatus according to an embodiment of this application;
FIG. 13 is a second structural diagram of a network access apparatus according to an embodiment of this application;
FIG. 14 is a third structural diagram of a network access apparatus according to an embodiment of this application;
FIG. 15 is a structural diagram of a coordinator according to an embodiment of this application; and
FIG. 16 is a structural diagram of a device according to an embodiment of this application.

### DESCRIPTION OF EMBODIMENTS

To make the objectives, technical solutions, and advantages of this application clearer, the following further describes this application in detail with reference to the accompanying drawings. Apparently, the described embodiments are merely some rather than all of the embodiments of this application. All other embodiments obtained by persons of ordinary skill in the art based on the embodiments of this application without creative efforts shall fall within the protection scope of this application.

The embodiments of this application are applicable to a VLC system, preferably applied to, but not limited to, a centralized interference coordination mode. A system architectural diagram is shown in FIG. 4. Each VPAN includes one coordinator, configured to manage a network of the VPAN, and a global coordinator GCCO is responsible for managing and coordinating a plurality of VPANs. For ease of description, it is assumed that four VPANs in the system are respectively represented as VPAN1, VPAN2, VPAN3, and VPAN4, and coordinators in the four VPANs are respectively represented as CCO1, CCO2, CCO3, and CCO4.

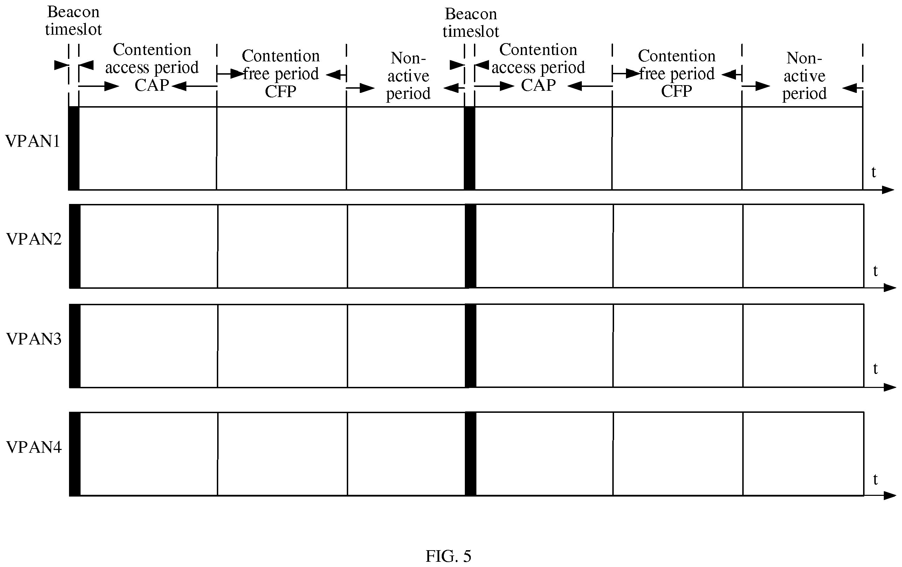

To avoid a bandwidth resource waste, during initial networking, coordinators in different VPANs send beacons by occupying a same beacon timeslot. As shown in FIG. 5, using the VPAN1 as an example, FIG. 5 shows two consecutive super frames, and a structure of a super frame shown in FIG. 3 is used as an example. A black rectangular area in each super frame represents a beacon timeslot, and a beacon timeslot is located in a start position of a super frame. Beacon timeslots in super frames of the VPAN1, the VPAN2, the VPAN3, and the VPAN4 are aligned. In other words, the CCO1, the CCO2, the CCO3, and the CCO4 send beacons by occupying a same beacon timeslot.

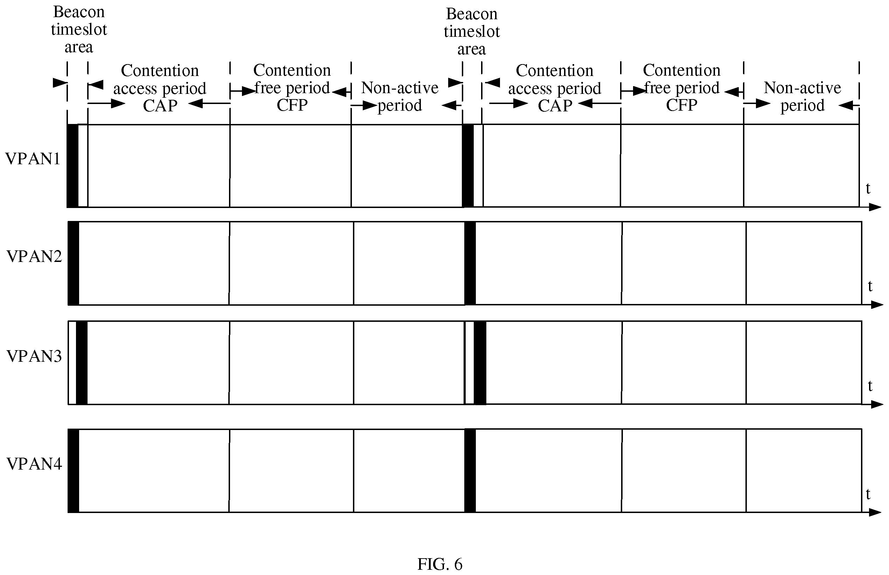

Certainly, an interference area may exist between different VPANs. If there is an access device in an interference area, the GCCO performs interference coordination for VPANs interfering with each other. For example, the GCCO performs interference coordination in a time division mode. As shown in FIG. 6, it is assumed that interference exists between the VPAN1 and the VPAN3, and there is an access device in an interference area. The GCCO has performed interference coordination for the VPAN1 and the VPAN3 in a time division mode, and after the coordination, the CCO1 and the CCO3 send beacons by occupying different beacon timeslots. The CCO3 sends a beacon by occupying a timeslot following the original beacon timeslot, and the CCO1 still sends a beacon by occupying the original beacon timeslot. Certainly, the other coordinators for which coordination is not performed still send beacons by occupying the same beacon timeslot. For each VPAN, in one super frame, after the interference coordination, an overall area of all beacon timeslots occupied by coordinators for which the interference coordination has been performed may be referred to as a beacon timeslot area, namely, an area marked in FIG. 6.

However, if there is no access device in an interference area, the GCCO does not need to perform interference coordination for VPANs interfering with each other. In this case, if a device in an interference area between different VPANs for which interference coordination has not been performed performs beacon detection when attempting to access a network, beacon interference may occur and the device cannot correctly detect a beacon. The embodiments of this application provide a beacon sending method and a network access method, so that when a device cannot correctly detect a beacon, the device sends a beacon request frame to a coordinator, and the coordinator adds a beacon timeslot and sends a beacon twice in one super frame, thereby increasing a probability that the device correctly detects a beacon, so that the device can normally access a network, and interference coordination can be performed in a timely manner.

In the following, embodiments of this application are described in detail with reference to the accompanying drawings.

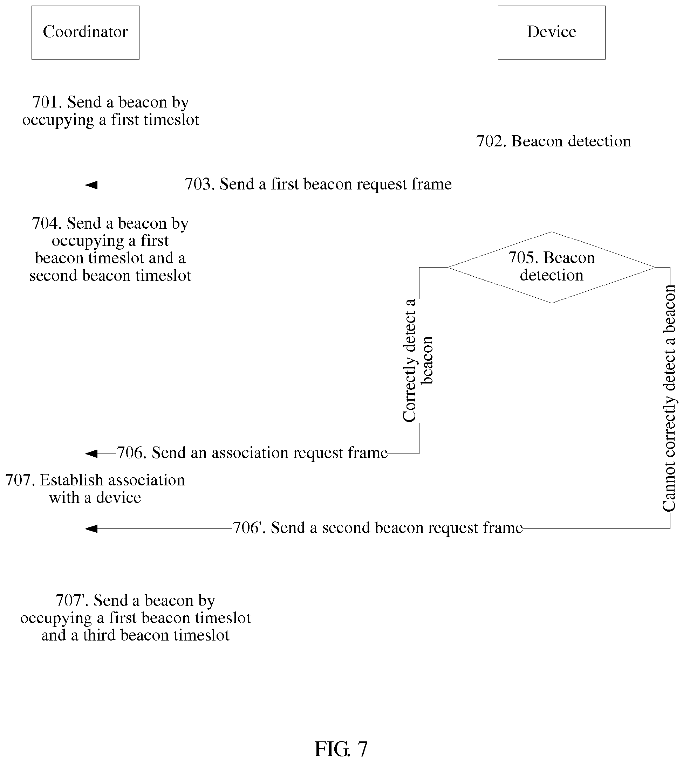

As shown in FIG. 7, a process of a method in an embodiment of this application is as follows.

Step 701: A coordinator sends a beacon by occupying a first beacon timeslot in a current super frame.

The first beacon timeslot may be allocated by a GCCO when the coordinator initially accesses a network, or may be adjusted after a GCCO performs interference coordination. For ease of description, it is assumed that a VPAN in which the coordinator is located is referred to as a first network in the following description.

Step 702: A device performs beacon detection before accessing a first network.

In this embodiment of this application, when the device attempts to access a network, there may be one or more target networks. For example, there is one target network, and it is assumed that the target network is the first network in which the coordinator is located. After being powered on, the device scans a channel, performs beacon detection, and normally access the network only when correctly detecting a beacon.

Step 703: The device sends a first beacon request frame if the device cannot correctly detect a beacon when a detection time reaches a specified first duration threshold, where the first beacon request frame is used to indicate that the device is in an interfered state.

The interfered state indicates that the device is located in an area in which different networks interfere with each other. To be specific, the device is located in an interference area between an area of the first network and an area of at least one second network.

It should be noted that although this application is described by using the first network and the second network as an example, persons skilled in the art may understand that the first network and the second network used in this embodiment of this application may both belong to a larger network.

The device presets a detection duration threshold, referred to as the first duration threshold. If the device does not correctly detect a beacon when the detection time reaches the first duration threshold, it may be considered that the device is located in an interference area between areas of at least two networks, and cannot normally access a network. In this case, the device sends a beacon request frame to the coordinator. For ease of subsequent description, the beacon request frame herein is referred to as the first beacon request frame.

A process in which the device sends the beacon request frame may be: determining a position of a beacon timeslot in a super frame (the determined position of the beacon timeslot herein is a position of the first beacon timeslot) based on energy detection, and after recognizing the position of the beacon timeslot, sending the beacon request frame as soon as possible in a CAP following the beacon timeslot, where the beacon request frame may be sent based on carrier sense multiple access/collision avoidance (English: Carrier Sense multiple Access/Collision Avoidance, CSMA/CA for short) contention.

The beacon request frame is used to report, to the coordinator, that the device is in a state in which the device is located in an interference area and cannot detect a beacon. A format of the beacon request frame is not specifically limited in this embodiment of this application, and may be, but not limited to, a format shown in Table 1.

**Table 1**

| Field (Field) | Description (Description) |
|---|---|
| Address | Address or identifier, for example, a MAC address or a 64-bit address, of a device sending the beacon request frame |
| Reason | Indicating a reason for sending the beacon request frame, for example, a beacon cannot be detected during network access |
| Sequence number | Sequence number of sending the beacon request frame |
| Quantity of retransmission times | Indicating a quantity of times of retransmitting the beacon request frame |
| Target coordinator Address | Address information of a coordinator in a target VPAN |

As shown in Table 1, the beacon request frame carries fields such as an address, a reason, a sequence number, a quantity of retransmission times, and a target coordinator address. The address is mandatory information carried in the beacon request frame, the other is optional information carried in the beacon request frame. Other information may further be added. The address field is used to describe an address or an identifier, for example, a MAC address or a 64-bit address, of the device sending the beacon request frame. The reason field is used to represent a reason for sending the beacon request frame. For example, a beacon cannot be detected during network access. The sequence number field is used to represent a sequence number of sending the beacon request frame. A sequence number of sending a beacon request frame for the first time may be set to 0 or 1, the sequence number is increased by 1 each time a beacon request frame is sent, and different sequence numbers are used to distinguish between different beacon request frames. The field of the quantity of retransmission times is used to represent a quantity of times that a beacon request frame having a same sequence number is retransmitted. To ensure that a sent beacon request frame can be received reliably, a beacon request frame having a same sequence number may be sent for a plurality of times, a quantity of retransmission times is set to 0 or 1 during the first transmission, and the quantity of times is increased by 1 each time the beacon request frame is retransmitted. The target coordinator address is used to represent an address of a coordinator in a target VPAN that the device attempts to access.

Step 704: The coordinator receives the first beacon request frame sent by the device, and sends a beacon by separately occupying a first beacon timeslot and a second beacon timeslot in each of N super frames starting from a next super frame, where N≥1, and N is a positive integer.

Specifically, after receiving the first beacon request frame sent by the device, the coordinator parses the beacon request frame, and determines that the device is located in an interference area and cannot access the network. Then, starting from the next super frame, the coordinator adds one beacon timeslot to send a beacon, and the added beacon timeslot is referred to as the second beacon timeslot. To be specific, the beacon is sent twice in one super frame.

A manner of selecting the second beacon timeslot may include but is not limited to the following two:

In a first manner, an idle timeslot in the beacon timeslot area is selected as the second beacon timeslot.

One super frame includes a beacon timeslot area and a non beacon timeslot area. The non beacon timeslot area includes a CAP, a CFP, and an inactive period. The beacon timeslot area is a time period merely used to send a beacon in the super frame. As described above, the beacon timeslot area is an overall area of beacon timeslots occupied by coordinators in VPANs for which interference coordination has been performed, and the idle timeslot is a timeslot not used to send beacons by coordinators in other VPANs interfering with each other.

It should be noted that if the current beacon timeslot area does not include an idle timeslot, a timeslot following the current beacon timeslot area is used as a second beacon timeslot. The beacon timeslot area to which the second beacon timeslot is added includes a second beacon timeslot area. This is equivalent to that the beacon timeslot area is expanded, and correspondingly, the non beacon timeslot area is reduced.

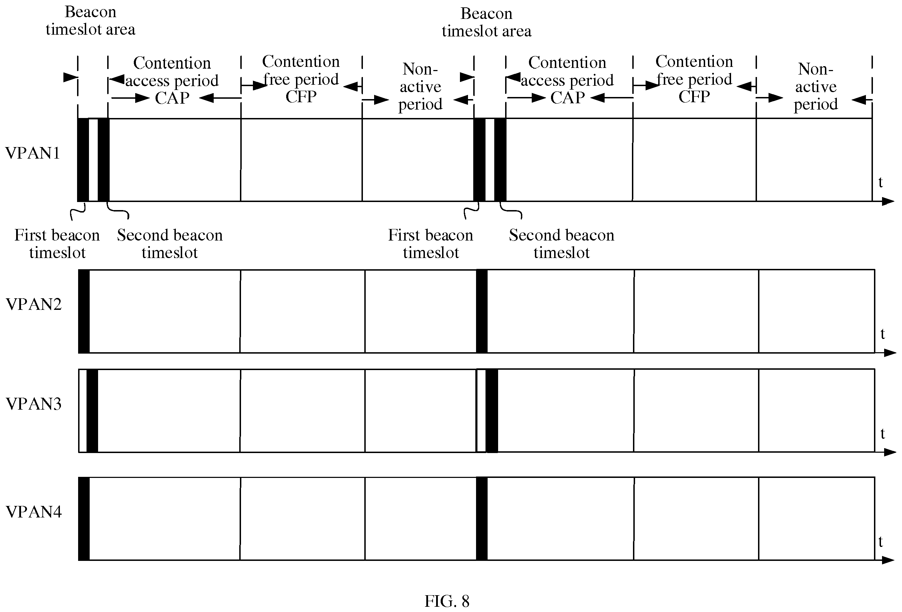

It is assumed that the first network is the VPAN1 in FIG. 5, interference coordination has been performed for the VPAN1 and the VPAN3 before the beacon request frame is received, and beacon timeslot allocation for each VPAN is shown in FIG. 6. After the second beacon timeslot is added, beacon timeslot allocation for the VPAN1 is shown in FIG. 8.

In a second manner, a timeslot in a CFP area is selected as the second beacon timeslot.

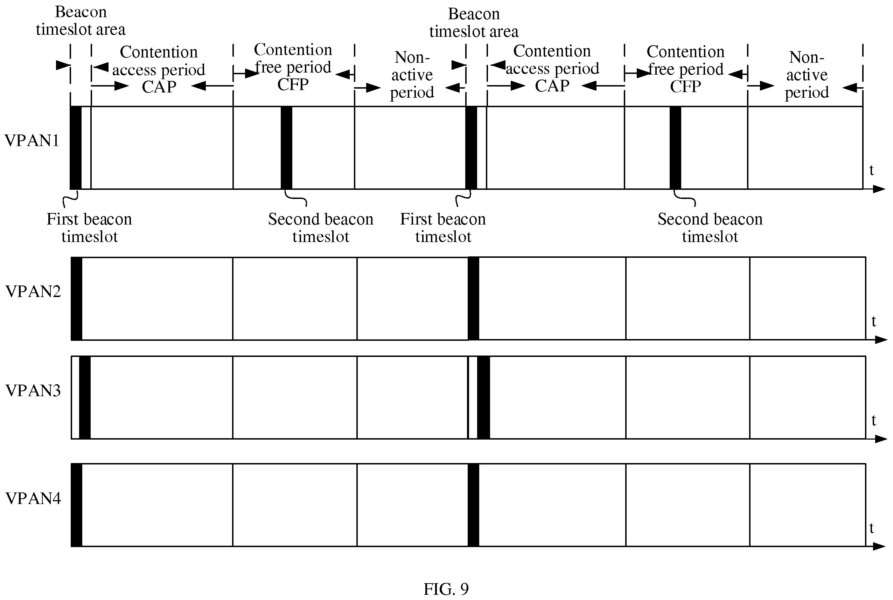

Similarly, it is assumed that the first network is the VPAN1 in FIG. 5, interference coordination has been performed for the VPAN1 and the VPAN3 before the beacon request frame is received, and beacon timeslot allocation for each VPAN is shown in FIG. 6. After the second beacon timeslot is added, beacon timeslot allocation for the VPAN1 is shown in FIG. 9.

Preferably, after the second beacon timeslot is added, the coordinator adds a beacon type to a beacon sent in each of the first beacon timeslot and the second beacon timeslot, and the beacon type is used to indicate a type of a beacon timeslot occupied for sending the beacon, and includes an original beacon and an additional beacon. For example, a beacon type carried in a beacon sent in the first beacon timeslot is an original beacon, and it indicates that the beacon is sent by using the original beacon timeslot, and is a beacon regularly and conventionally sent by the coordinator; a beacon type carried in a beacon sent in the second beacon timeslot is an additional beacon, and it indicates that the beacon is an extra beacon sent by the coordinator other than the original beacon.

Step 705: The device continues to perform beacon detection after sending the first beacon request frame to the coordinator.

If the device correctly detects a beacon before a detection continuation time reaches a specified second duration threshold, and determines that the detected beacon is sent by the coordinator in the first network, the device performs step 706.

If the device does not correctly detect a beacon yet when the detection continuation time reaches the specified second duration threshold, the device performs step 706', or determines that network access fails.

Step 706: The device sends an association request frame to the coordinator, where the association request frame is used to request association with the coordinator.

Preferably, the association request frame further includes a beacon type indication, used to indicate an association request initiated by the device after the device detects an original beacon or an additional beacon, or an association request initiated by the device after the device detects both an original beacon and an additional beacon. Because the coordinator adds the beacon type to the beacon sent in each of the first beacon timeslot and the second beacon timeslot, when detecting a beacon, the device may parse the beacon to obtain the beacon type.

Optionally, the association request frame further includes an interference parameter, and the interference parameter is obtained by the device during a process of beacon detection.

Step 707: If the coordinator receives the association request frame sent by the device and an occupation time of the N super frames does not reach a specified threshold, the coordinator establishes association with the device.

Preferably, when the coordinator further determines, based on the beacon type indication included in the association request frame, that the association request frame is an association request initiated by the device after the device detects an original beacon, the coordinator sends the beacons by occupying a first beacon timeslot in each super frame following the N super frames, and uses a second beacon timeslot for other purposes.

When determining that the association request frame is an association request initiated by the device after the device detects an additional beacon or after the device detects both an original beacon and an additional beacon, the coordinator triggers interference coordination based on the interference parameter carried in the association request frame.

Step 706': The device sends a second beacon request frame to the coordinator.

The second beacon request frame is used to indicate that the device still is in the interfered state, and the interfered state indicates that the device is located in an area in which different networks interfere with each other. The second beacon request frame and the first beacon request frame have a same format, and are distinguished by using different sequence numbers in the sequence number fields.

If the device does not correctly detect a beacon yet when the detection continuation time after the device sends the first beacon request frame reaches the specified second duration threshold, it may be considered that a beacon sent by using the second beacon timeslot added by the coordinator still cannot be detected by the device.

There may be the following possible reasons.

(1) Interference exists between the first network and at least two second networks.

In this case, if the coordinator receives the second beacon request frame sent by the device, and the occupation time of the N super frames does not reach the specified threshold, the coordinator adds one beacon timeslot, and may send a beacon by separately occupying the first beacon timeslot, the second beacon timeslot, and a fourth beacon timeslot in each super frame following the N super frames. In other words, the coordinator sends a beacon three times in one super frame.

Alternatively, the coordinator directly ignores the second beacon request frame, and performs no processing.

(2) Interference exists between the first network and one second network, but a coordinator in the second network also receives the first beacon request frame sent by the device, and an additional beacon timeslot added to a CFP area by the coordinator in the second network is located in a same position as the second beacon timeslot added by the coordinator in the first network, leading to beacon interference again.

In this case, the coordinator performs step 707'.

Step 707': If the coordinator receives the second beacon request frame sent by the device, and the occupation time of the N super frames does not reach the specified threshold, the coordinator sends a beacon by separately occupying the first beacon timeslot and a third beacon timeslot in each super frame following the N super frames, where the third beacon timeslot is located in a CFP area.

In other words, the coordinator re-selects a third beacon timeslot in a position different from that of the second beacon timeslot in the CFP area, to send a beacon, thereby resolving a problem that the beacon interference occurs again.

In another case, if the coordinator does not receive the association request frame sent by the device or the second beacon request frame sent by the device, and the occupation time of the N super frames reaches the specified threshold, the coordinator sends a beacon by occupying only the first beacon timeslot in each super frame following the N super frames.

In addition, a resource of the second beacon timeslot is released, and the second beacon timeslot is used for another purpose.

In this way, according to the method provided in this embodiment of this application, when the device cannot correctly detect a beacon due to beacon interference and consequently cannot normally access a network, a beacon timeslot is added, and a beacon is sent at least twice in one super frame, so that the device can correctly detect the beacon in a timely manner, and normally access a network. In addition, interference coordination can be performed in a timely manner when it is determined, based on the indication information of the device in the association request frame, that interference coordination needs to be performed, thereby ensuring that other devices normally access the network subsequently, and improving performance of a network system including a plurality of VPANs.

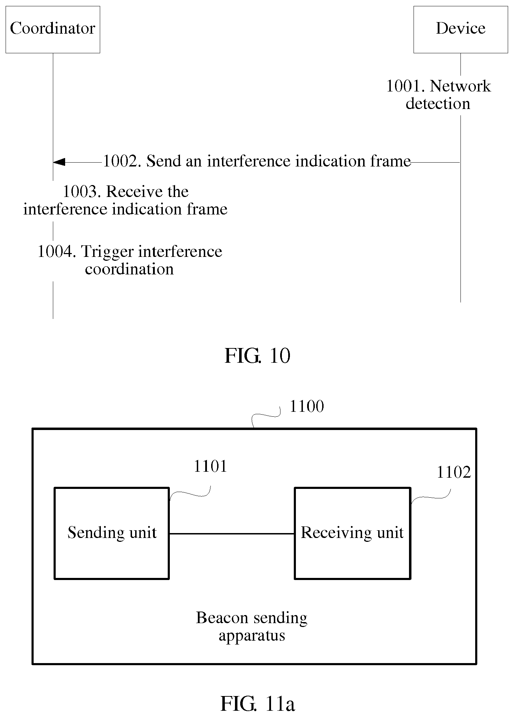

An embodiment of this application further provides a network access method. Referring to FIG. 10, a process of the method is as follows.

Step 1001: A device performs network detection before accessing a first network, where the network detection includes beacon detection and interference parameter detection.

Similarly, in this embodiment of this application, when the device attempts to access a network, there may be one or more target networks. For example, there is one target network, and it is assumed that the target network is represented by using the first network. After being powered on, the device scans a channel and performs network detection, including beacon detection and interference parameter detection. The device normally accesses the network only when correctly detecting a beacon.

Step 1002: The device sends an interference indication frame to a coordinator in the first network if the device cannot correctly detect a beacon when a detection time reaches a specified first duration threshold, where the interference indication frame carries a detected interference parameter of the first network and at least one second network.

The interference parameter includes identification information of the first network and identification information of the at least one second network, and/or information about quality of a signal of the first network and a signal of the at least one second network that are received by the device.

The device continues to perform beacon detection after sending the interference indication frame.

Step 1003: The coordinator in the first network receives the interference indication frame sent by the device, where the interference indication frame carries an interference parameter, and the interference parameter refers to interference information indicating that at least one second network interferes with the first network.

Preferably, the interference indication frame further carries at least one of a field indicating a sequence number of sending the interference indication frame and a field indicating a quantity of times of retransmitting the interference indication frame.

Indication meanings of the sequence number field and the field of the quantity of retransmission times are the same as the indication meanings and functions of the sequence number field and the field of the quantity of retransmission times in the beacon request frame.

A process in which the device sends the interference indication frame may be: determining a position of a beacon timeslot in a super frame based on energy detection, and after recognizing the position of the beacon timeslot, sending the interference indication frame as soon as possible in a CAP following the beacon timeslot, where the interference indication frame may be sent based on CSMA/CA contention.

Step 1004: The coordinator triggers interference coordination based on the interference indication frame.

Specifically, an interference coordination process is as follows:

The coordinator sends an interference coordination request message to a global coordinator managing the coordinator, and the interference coordination request message includes the interference parameter.

After receiving the interference coordination request message, the global coordinator coordinates networks interfering with each other included in the interference parameter. In other words, the global coordinator respectively specifies, for the first network and the at least one second network, beacon timeslots without mutual interference to send beacons. The global coordinator sends an interference coordination response message to each of the coordinator and another coordinator in the at least one second network. The interference coordination response message may carry address information of each coordinator, a beacon timeslot occupied for sending a beacon, and an effective time of a currently allocated beacon timeslot.

Assuming that the coordinator in the first network is CCO1, there is only one second network, and the coordinator in the second network is CCO2, an example of a format of the interference coordination response message is shown in Table 2.

**Table 2**

| Field (Field) | Description (Description) |
|---|---|
| Information about the CCO1 | Address information of the CCO1 |
| Sequence number 1 of a beacon timeslot | Sequence number of a beacon timeslot allocated to the CCO1 |
| Information about the CCO2 | Address information of the CCO2 |
| Sequence number 2 of a beacon timeslot | Sequence number of a beacon timeslot allocated to the CCO2 |
| Effective time | Effective time of a currently allocated beacon timeslot |

The coordinator receives the interference coordination response message returned by the global coordinator, and the interference coordination response message includes a beacon timeslot used for the coordinator to send a beacon.

The coordinator sends, based on the interference coordination response message, a beacon by occupying the beacon timeslot indicated by the global coordinator.

In this way, after the interference coordination, a probability that the device correctly detects a beacon is increased, facilitating correct network access of the device. If the device correctly detects a beacon before a detection continuation time reaches a specified second duration threshold, and determines that the detected beacon is sent by the coordinator in the first network, the device sends an association request frame to the coordinator, and performs a subsequent association process; or if the device does not correctly detect a beacon yet when a detection continuation time reaches the specified second duration threshold, the device determines that network access fails.

In this way, when determining that the device cannot correctly detect a beacon, the device sends the interference indication frame in a timely manner, so that the coordinator can trigger an interference coordination process in a timely manner, the device can access a network as soon as possible after the interference coordination, it is ensured that other devices can correctly detect beacons and normally access the network subsequently, and performance of a network system including a plurality of VPANs is improved.

Based on a same inventive concept, referring to FIG. 11a, an embodiment of this application provides a beacon sending apparatus 1100, including a sending unit 1101 and a receiving unit 1102.

The sending unit 1101 is configured to send a beacon, where the beacon occupies a first beacon timeslot in a current super frame.

The receiving unit 1102 is configured to receive a first beacon request frame after the sending unit 1101 sends the beacon, where the first beacon request frame is used to indicate that a device is located in an interference area between an area of a first network in which the coordinator is located and an area of at least one second network.

The sending unit 1101 is configured to: after the receiving unit 1102 receives the first beacon request frame, send a beacon by separately occupying a first beacon timeslot and a second beacon timeslot in each of N super frames starting from a next super frame, where N≥1, and N is a positive integer.

Preferably, the first beacon timeslot and the second beacon timeslot are both located in a beacon timeslot area of the super frame, the second beacon timeslot is an idle timeslot, the beacon timeslot area is a time period that is merely used to send a beacon in the super frame, and the idle timeslot is a timeslot that is in the beacon timeslot area and that is not used to send beacons by coordinators in VPANs interfering with each other; or
the first beacon timeslot is located in a beacon timeslot area of the super frame, and the second beacon timeslot is located in a contention free period CFP area of the super frame.

Preferably, the sending unit 1101 is configured to:
a beacon type carried in a beacon sent by occupying the first beacon timeslot is an original beacon;
a beacon type carried in a beacon sent by occupying the second beacon timeslot is an additional beacon; and
the original beacon is used to indicate that the beacon is a beacon periodically and conventionally sent by the sending unit, and the additional beacon is used to indicate that the beacon is an extra beacon sent by the sending unit other than the original beacon.

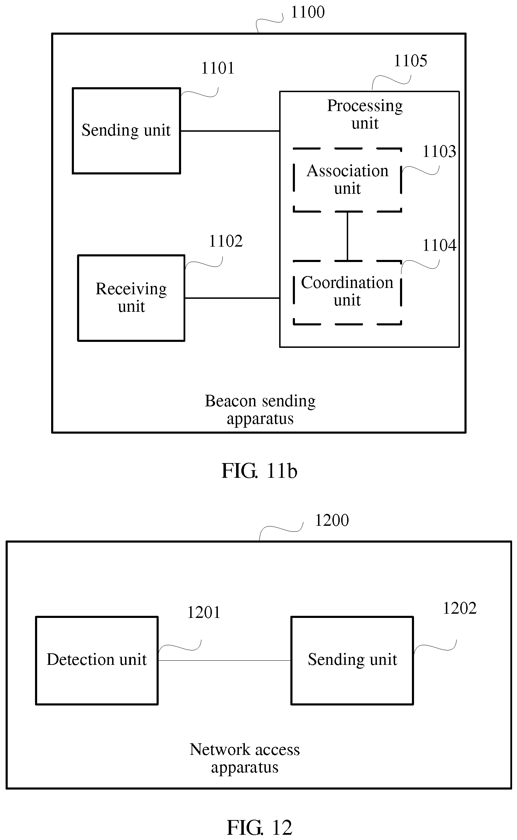

Preferably, the beacon sending apparatus 1100 further includes a processing unit 1105. An example of a connection manner is shown in FIG. 11b. The sending unit 1101 and the receiving unit 1102 are separately connected to the processing unit 1105. The processing unit 1105 includes an association unit 1103 and a coordination unit 1104. The association unit 1103 is configured to establish association with the device if it is determined, when the receiving unit 1102 receives an association request frame sent by the device, that an occupation time of the N super frames does not reach a specified threshold; and
the sending unit 1101 is further configured to: if the receiving unit 1102 does not receive the association request frame sent by the device, and it is determined that the occupation time of the N super frames reaches the specified threshold, send the beacons by occupying only a first beacon timeslot in each super frame following the N super frames.

Preferably, the association request frame carries a beacon type indication, and the beacon type indication is used to represent an association request that is initiated by the device after the device detects an original beacon, or is used to represent an association request that is initiated by the device after the device detects an additional beacon; and
the coordinator 1100 further includes a coordination unit 1104, configured to: after the receiving unit 1102 receives the association request frame sent by the device, if it is determined, based on the beacon type indication carried in the association request frame received by the receiving unit 1102, that the association request frame is an association request that is initiated by the device after the device detects an original beacon, skip triggering interference coordination; or if it is determined that the association request frame is an association request that is initiated by the device after the device detects an additional beacon, trigger interference coordination.

Preferably, the coordination unit 1104 is further configured to: during a process of triggering the interference coordination, use an interference parameter carried in the association request frame received by the receiving unit.

Preferably, if the first beacon timeslot is located in the beacon timeslot area of the super frame, and the second beacon timeslot is located in the CFP area of the super frame,
the sending unit 1101 is further configured to: if it is determined, when the receiving unit 1102 receives a second beacon request frame sent by the device, that the occupation time of the N super frames does not reach the specified threshold, send a beacon by separately occupying the first beacon timeslot and a third beacon timeslot in each super frame following the N super frames, where the third beacon timeslot is located in a CFP area.

Preferably, the first beacon request frame carries a field that indicates an address of the device, and a format of the second beacon request frame is the same as a format of the first beacon request frame.

Preferably, the first beacon request frame further carries at least one of a field indicating a request reason, a field indicating a sequence number of sending the beacon request frame, a field indicating a quantity of times of retransmitting the beacon request frame, and a field indicating an address of a target access coordinator.

Based on a same inventive concept, referring to FIG. 12, an embodiment of this application provides a network access apparatus 1200, including a detection unit 1201 and a sending unit 1202.

The detection unit 1201 is configured to perform beacon detection before the network access apparatus accesses a first network.

The sending unit 1202 is configured to send a first beacon request frame if the detection unit 1201 cannot correctly detect a beacon when a detection time reaches a specified first duration threshold, where the first beacon request frame is used to indicate that the device is in an interfered state.

Preferably, the detection unit 1201 is further configured to: after the sending unit 1202 sends the first beacon request frame to a coordinator in the first network, continue to perform beacon detection; and if correctly detecting a beacon before a detection continuation time reaches a specified second duration threshold, further determine whether the detected beacon is sent by the coordinator in the first network; and
the sending unit 1202 is further configured to: if the detection unit 1201 determines that the detected beacon is sent by the coordinator in the first network, send an association request frame to the coordinator in the first network, where the association request frame is used to request for association with the coordinator in the first network; or
if the detection unit 1201 does not correctly detect a beacon yet when the detection continuation time reaches the specified second duration threshold, send a second beacon request frame to a coordinator in the first network, where the second beacon request frame is used to indicate that the device still is in the interfered state.

Preferably, the detection unit 1201 is further configured to: after correctly detecting the beacon, parse the detected beacon, and determine a beacon type included in the beacon, where
the beacon type is an original beacon or an additional beacon, and
the original beacon is used to indicate that the beacon is a beacon periodically and conventionally sent by the coordinator, and the additional beacon is used to indicate that the beacon is an extra beacon sent by the coordinator other than the original beacon.

Preferably, the sending unit 1202 is further configured to: when the detection unit 1201 determines that the beacon type included in the beacon is an original beacon, add, to the association request frame sent to the coordinator in the first network, a beacon type indication used to indicate that an association request is initiated by the device after the device detects the original beacon; or
when the detection unit 1201 determines that the beacon type included in the beacon is an additional beacon, add, to the association request frame sent to the coordinator in the first network, a beacon type indication used to indicate that an association request is initiated by the device after the device detects the additional beacon.

Preferably, the detection unit 1201 is further configured to further perform interference parameter detection during a process of the beacon detection; and
the sending unit 1202 is further configured to: when the detection unit 1201 determines that the beacon type included in the beacon is an additional beacon, further add, to the association request frame sent to the coordinator in the first network, an interference parameter detected by the detection unit.

Preferably, the first beacon request frame carries a field that indicates an address of the device, and a format of the second beacon request frame is the same as a format of the first beacon request frame.

Preferably, the first beacon request frame further carries at least one of a field indicating a request reason, a field indicating a sequence number of sending the beacon request frame, a field indicating a quantity of times of retransmitting the beacon request frame, and a field indicating an address of a target access coordinator.

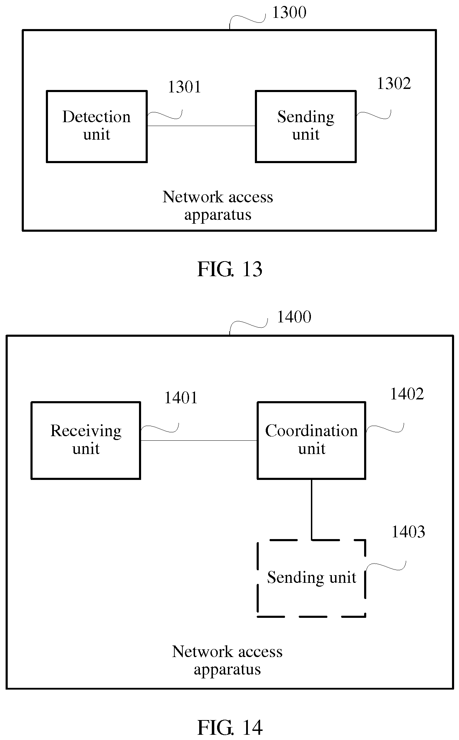

Based on a same inventive concept, referring to FIG. 13, an embodiment of this application further provides another network access apparatus 1300, including a detection unit 1301 and a sending unit 1302.

The detection unit 1301 is configured to perform network detection before the network access apparatus accesses a first network, where the network detection includes beacon detection and interference parameter detection.

The sending unit 1302 is configured to send an interference indication frame to a coordinator in the first network when the detection unit 1301 cannot correctly detect a beacon yet when a detection time reaches a specified first duration threshold, where the interference indication frame carries a detected interference parameter of the first network and at least one second network.

Preferably, the interference parameter includes identification information of the first network and the second network, and quality of a signal of the first network and a signal of the at least one second network that are received by the device.

Based on a same inventive concept, referring to FIG. 14, an embodiment of this application further provides another network access apparatus 1400. The apparatus 1400 is located in a first network. The apparatus 1400 includes a receiving unit 1401 and a coordination unit 1402.

The receiving unit 1401 is configured to receive an interference indication frame sent by a device, where the interference indication frame carries an interference parameter, and the interference parameter refers to interference information indicating that at least one second network interferes with the first network.

The coordination unit 1402 is configured to trigger interference coordination based on the interference indication frame.

Preferably, the interference parameter includes identification information of the first network and identification information of the at least one second network, and/or information about quality of a signal of the first network and a signal of the at least one second network that are received by the device.

Preferably, the apparatus further includes a sending unit 1403, where the sending unit 1403 is configured to: when the coordination unit 1402 triggers interference coordination, send an interference coordination request message to a global coordinator managing the apparatus 1400, where the interference coordination request message includes the interference parameter;
the receiving unit 1401 is further configured to receive an interference coordination response message returned by the global coordinator, where the interference coordination response message includes a beacon timeslot used for the coordinator to send a beacon; and
the sending unit 1403 is further configured to send, based on the interference coordination response message received by the receiving unit 1401, a beacon by occupying the beacon timeslot indicated by the global coordinator.

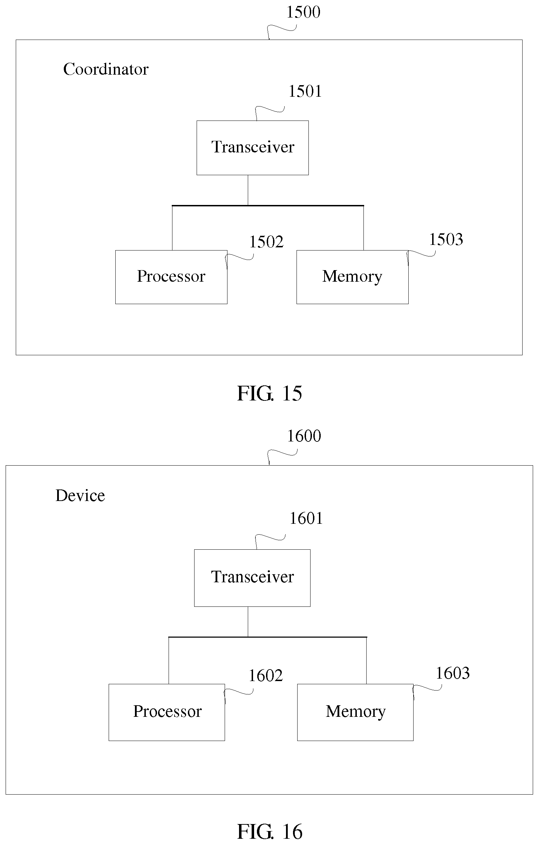

Based on a same inventive concept, referring to FIG. 15, an embodiment of this application provides a coordinator 1500, configured to perform functions of the coordinator in the beacon sending method and the network access method that are provided in the embodiments of this application. The coordinator 1500 includes a transceiver 1501, a processor 1502, and a memory 1503. The memory 1503 stores a group of programs. The processor 1502 is configured to invoke the programs stored in the memory 1503, to enable the coordinator 1500 to perform the method in FIG. 7 or FIG. 10.

It should be noted that a connection manner between the parts in FIG. 15 is merely a possible example. The connection manner may alternatively be as follows: The transceiver 1501 and the memory 1503 are both connected to the processor 1502, and the transceiver 1501 is not connected to the memory 1503. Alternatively, another possible connection manner may be used.

The processor 1502 may be a central processing unit (English: central processing unit, CPU for short), a network processor (English: network processor, NP for short), or a combination of a CPU and an NP.

The processor 1502 may further include a hardware chip. The foregoing hardware chip may be an application-specific integrated circuit (English: application-specific integrated circuit, ASIC for short), a programmable logic device (English: programmable logic device, PLD for short), or a combination thereof. The PLD may be a complex programmable logic device (English: complex programmable logic device, CPLD for short), a field-programmable gate array (English: field-programmable gate array, FPGA for short), a generic array logic (English: generic array logic, GAL for short), or any combination thereof.

The memory 1503 may include a volatile memory (English: volatile memory), such as a random access memory (English: random-access memory, RAM for short). The memory 1503 may alternatively include a non-volatile memory (English: non-volatile memory), such as a flash memory (English: flash memory), a hard disk (English: hard disk drive, HDD for short), or a solid state disk (English: solid-state drive, SSD for short). The memory 1503 may alternatively include a combination of the foregoing types of memories.

Based on a same inventive concept, referring to FIG. 16, an embodiment of this application provides a device 1600, configured to perform functions of the device in the beacon sending method and the network access method that are provided in the embodiments of this application. The device 1600 includes a transceiver 1601, a processor 1602, and a memory 1603. The memory 1603 stores a group of programs. The processor 1602 is configured to invoke the programs stored in the memory 1603, to enable the device 1600 to perform the method in FIG. 7 or FIG. 10.

It should be noted that a connection manner between the parts in FIG. 16 is merely a possible example. The connection manner may alternatively be as follows: The transceiver 1601 and the memory 1603 are both connected to the processor 1602, and the transceiver 1601 is not connected to the memory 1603. Alternatively, another possible connection manner may be used.

The processor 1602 may be a central processing unit (English: central processing unit, CPU for short), a network processor (English: network processor, NP for short), or a combination of a CPU and an NP.

The processor 1602 may further include a hardware chip. The foregoing hardware chip may be an application-specific integrated circuit (English: application-specific integrated circuit, ASIC for short), a programmable logic device (English: programmable logic device, PLD for short), or a combination thereof. The PLD may be a complex programmable logic device (English: complex programmable logic device, CPLD for short), a field-programmable gate array (English: field-programmable gate array, FPGA for short), a generic array logic (English: generic array logic, GAL for short), or any combination thereof.

The memory 1603 may include a volatile memory (English: volatile memory), such as a random access memory (English: random-access memory, RAM for short). The memory 1603 may alternatively include a non-volatile memory (English: non-volatile memory), such as a flash memory (English: flash memory), a hard disk (English: hard disk drive, HDD for short), or a solid state disk (English: solid-state drive, SSD for short). The memory 1603 may alternatively include a combination of the foregoing types of memories.

Persons skilled in the art should understand that the embodiments of this application may be provided as a method, a system, or a computer program product. Therefore, this application may use a form of hardware only embodiments, software only embodiments, or embodiments with a combination of software and hardware. Moreover, a form of a computer program product that is implemented on one or more computer usable storage media (including but not limited to a disk memory, a CD-ROM, and an optical memory) that include computer usable program code may be used in this application.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams, and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specified function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

## Claims

1. A beacon sending method in a visible light communication personal area network, VPAN, comprising:
sending (701), by a coordinator of the VPAN, a beacon, wherein the beacon occupies a first beacon timeslot in a current super frame;
receiving, by the coordinator, a beacon request frame, wherein the beacon request frame is used to indicate that a device is located in an interference area between an area of a first network in which the coordinator is located and an area of at least one second network; and
sending (704), by the coordinator, two beacons in each of N super frames starting from a next super frame, wherein the two beacons occupy the first beacon timeslot and a second beacon timeslot in each of the N super frames, N≥1, and N is a positive integer.

2. The method according to claim 1, wherein:
the first beacon timeslot is located in a beacon timeslot area of the super frame, and the second beacon timeslot is located in a contention free period, CFP, area of the super frame.

3. The method according to claim 1 or 2, wherein:
a beacon type of the beacon sent in the first beacon timeslot is an original beacon;
a beacon type of the beacon sent in the second beacon timeslot is an additional beacon; and
the original beacon is used to indicate that the beacon is a beacon periodically and conventionally sent by the coordinator, and the additional beacon is used to indicate that the beacon is an extra beacon sent by the coordinator other than the original beacon.

4. The method according to claim 3, wherein after the coordinator sends the two beacons in each of N super frames starting from a next super frame, the method further comprises:
establishing (707), by the coordinator, association with the device if the coordinator receives an association request frame sent by the device, and an occupation time of the N super frames does not reach a specified threshold.

5. The method according to any one of claims 1 to 4, wherein the beacon request frame carries a field that indicates an address of the device.

6. The method according to claim 5, wherein the beacon request frame further carries at least one of a field indicating a request reason, a field indicating a sequence number of sending the beacon request frame, a field indicating a quantity of times of retransmitting the beacon request frame, and a field indicating an address of a target access coordinator.

7. The method according to any one of claims 1 to 6, wherein the first network is a beacon-enabled VPAN.

8. A computer program product, comprising computer program instructions which, when executed by a computer unit, will cause the computer unit to perform the method according to any one of claims 1 to 7.

9. A beacon sending apparatus in a visible light communication personal area network, VPAN, comprising:
a sending unit (1101), configured to send a beacon, wherein the beacon occupies a first beacon timeslot in a current super frame; and
a receiving unit (1102), configured to receive a beacon request frame after the sending unit sends the beacon, wherein the beacon request frame is used to indicate that a device is located in an interference area between an area of a first network in which the beacon sending apparatus is located and an area of at least one second network, wherein
the sending unit is configured to: after the receiving unit receives the beacon request frame, send two beacons in each of N super frames starting from a next super frame, wherein the two beacons occupy the first beacon timeslot and a second beacon timeslot in each of the N super frames, N≥1, and N is a positive integer.

10. The apparatus according to claim 9, wherein:
the first beacon timeslot is located in a beacon timeslot area of the super frame, and the second beacon timeslot is located in a contention free period, CFP, area of the super frame.

11. The apparatus according to claim 9 or 10, wherein:
a beacon type of the beacon sent in the first beacon timeslot is an original beacon;
a beacon type of the a beacon sent in the second beacon timeslot is an additional beacon; and
the original beacon is used to indicate that the beacon is a beacon being periodically and conventionally sent, and the additional beacon is used to indicate that the beacon is an extra beacon other than the original beacon.

12. The apparatus according to claim 11, further comprising an association unit (1103), wherein:
the association unit is configured to establish association with the device if it is determined, when the receiving unit receives an association request frame sent by the device, that an occupation time of the N super frames does not reach a specified threshold.

13. The apparatus according to any one of claims 9 to 12, wherein the beacon request frame carries a field that indicates an address of the device.

14. The apparatus according to claim 13, wherein the beacon request frame further carries at least one of a field indicating a request reason, a field indicating a sequence number of sending the beacon request frame, a field indicating a quantity of times of retransmitting the beacon request frame, and a field indicating an address of a target access coordinator.

15. The apparatus according to any one of claims 9 to 14, wherein the apparatus is a coordinator in a beacon-enabled VPAN.

## Patentansprüche

1. Bakensendeverfahren in einem persönlichen Kommunikationsnetzwerk für sichtbares Licht ("Visible Light Communication Personal Area Network"), VPAN, umfassend:
Senden (701) einer Bake durch einen Koordinator des VPAN, wobei die Bake einen ersten Bakenzeitschlitz in einem aktuellen Superrahmen belegt;
Empfangen eines Bakenanforderungsrahmens durch den Koordinator, wobei der Bakenanforderungsrahmen verwendet wird, um anzugeben, dass sich eine Vorrichtung in einem Interferenzbereich zwischen einem Bereich eines ersten Netzwerks, in dem sich der Koordinator befindet, und einem Bereich von mindestens einem zweiten Netzwerk befindet; und
Senden (704) von zwei Baken in jedem der N Superrahmen durch den Koordinator, ausgehend von einem nächsten Superrahmen, wobei die beiden Baken den ersten Bakenzeitschlitz und einen zweiten Bakenzeitschlitz in jedem der N Superrahmen, N≥1, belegen und N eine positive ganze Zahl ist.

2. Verfahren nach Anspruch 1, wobei:
sich der erste Bakenzeitschlitz in einem Bakenzeitschlitzbereich des Superrahmens befindet, und der zweite Bakenzeitschlitz in einem konfliktfreien Zeitraum ("Contention Free Period"), CFP, im Bereich des Superrahmens.

3. Verfahren nach Anspruch 1 oder 2, wobei:
eine Bakenart der im ersten Bakenzeitschlitz gesendeten Bake eine Originalbake ist; eine Bakenart der im zweiten Bakenzeitschlitz gesendeten Bake eine zusätzliche Bake ist; und
die Originalbake verwendet wird, um anzugeben, dass es sich bei der Bake um eine Bake handelt, die regelmäßig und üblicherweise vom Koordinator gesendet wird, und die zusätzliche Bake verwendet wird, um anzugeben, dass die vom Koordinator gesendete Bake eine Extra-Bake ist, die nicht die Originalbake ist.

4. Verfahren nach Anspruch 3, wobei das Verfahren, nachdem der Koordinator die beiden Baken in jedem von N Superrahmen, ausgehend von einem nächsten Superrahmen, sendet, ferner umfasst:
Herstellen (707) einer Assoziation mit der Vorrichtung durch den Koordinator, wenn der Koordinator einen von der Vorrichtung gesendeten Assoziationsanforderungsrahmen erhält und eine Belegungszeit der N Superrahmen einen bestimmten Schwellenwert nicht erreicht.

5. Verfahren nach einem der Ansprüche 1 bis 4, wobei der Bakenanforderungsrahmen ein Feld trägt, das eine Adresse der Vorrichtung angibt.

6. Verfahren nach Anspruch 5, wobei der Bakenanforderungsrahmen ferner ein Feld, das einen Anforderungsgrund angibt, und/oder ein Feld, das eine Sequenznummer für das Senden des Bakenanforderungsrahmens angibt, und/oder ein Feld, das eine Anzahl von Malen angibt, die der Bakenanforderungsrahmen erneut gesendet wird, und/oder ein Feld, das eine Adresse eines Zielzugriffskoordinators angibt, trägt.

7. Verfahren nach einem der Ansprüche 1 bis 6, wobei das erste Netzwerk ein bakenfähiges VPAN ist.

8. Computerprogrammprodukt, umfassend Computerprogrammanweisungen, die, wenn sie durch eine Computereinheit ausgeführt werden, die Computereinheit veranlassen, das Verfahren nach einem der Ansprüche 1 bis 7 durchzuführen.

9. Bakensendegerät in einem persönlichen Kommunikationsnetzwerk für sichtbares Licht ("Visible Light Communication Personal Area Network"), VPAN, umfassend:
eine Sendeeinheit (1101), die zum Senden einer Bake konfiguriert ist, wobei die Bake einen ersten Bakenzeitschlitz in einem aktuellen Superrahmen belegt; und
eine Empfangseinheit (1102), die zum Empfangen eines Bakenanforderungsrahmens, nachdem die Sendeeinheit die Bake sendet, konfiguriert ist, wobei der Bakenanforderungsrahmen verwendet wird, um anzugeben, dass sich eine Vorrichtung in einem Interferenzbereich zwischen einem Bereich eines ersten Netzwerks, in dem sich das Bakensendegerät befindet, und einem Bereich von mindestens einem zweiten Netzwerk befindet, wobei
die Sendeeinheit konfiguriert ist um, nachdem die Empfangseinheit den Bakenanforderungsrahmen empfangen hat, zwei Baken in jedem von N Superrahmen zu senden, ausgehend von einem nächsten Superrahmen, wobei die zwei Baken den ersten Bakenzeitschlitz und einen zweiten Bakenzeitschlitz in jedem der N Superrahmen, N≥1, belegen und N eine positive ganze Zahl ist.

10. Gerät nach Anspruch 9, wobei:
sich der erste Bakenzeitschlitz in einem Bakenzeitschlitzbereich des Superrahmens befindet, und der zweite Bakenzeitschlitz in einem konfliktfreien Zeitraum ("Contention Free Period"), CFP, im Bereich des Superrahmens.

11. Gerät nach Anspruch 9 oder 10, wobei:
eine Bakenart der im ersten Bakenzeitschlitz gesendeten Bake eine Originalbake ist; eine Bakenart der im zweiten Bakenzeitschlitz gesendeten Bake eine zusätzliche Bake ist; und
die Originalbake verwendet wird, um anzugeben, dass die Bake eine Bake ist, die regelmäßig und üblicherweise gesendet wird, und die zusätzliche Bake verwendet wird, um anzugeben, dass die Bake eine Extra-Bake ist, die nicht die Originalbake ist.

12. Gerät nach Anspruch 11, ferner umfassend eine Assoziationseinheit (1103), wobei: die Assoziationseinheit konfiguriert ist, um eine Assoziation mit der Vorrichtung herzustellen, wenn beim Empfang eines von der Vorrichtung gesendeten Assoziationsanforderungsrahmens durch die Empfangseinheit festgestellt wird, dass eine Belegungszeit der N Superrahmen einen bestimmten Schwellenwert nicht erreicht.

13. Gerät nach einem der Ansprüche 9 bis 12, wobei der Bakenanforderungsrahmen ein Feld trägt, das eine Adresse der Vorrichtung angibt.

14. Gerät nach Anspruch 13, wobei der Bakenanforderungsrahmen ferner ein Feld, das einen Anforderungsgrund angibt, und/oder ein Feld, das eine Sequenznummer für das Senden des Bakenanforderungsrahmens angibt, und/oder ein Feld, das eine Anzahl von Malen angibt, die der Bakenanforderungsrahmen erneut gesendet wird, und/oder ein Feld, das eine Adresse eines Zielzugriffskoordinators angibt, trägt.

15. Gerät nach einem der Ansprüche 9 bis 14 wobei das Gerät ein Koordinator in einem bakenfähigen VPAN ist.

## Revendications

1. Procédé d'envoi de balise dans un réseau personnel de communication par lumière visible, VPAN, comprenant :
l'envoi (701), par un coordinateur du VPAN, d'une balise, dans lequel la balise occupe un premier créneau temporel de balise dans une super trame en cours ;
la réception, par le coordinateur, d'une trame de demande de balise, dans lequel la trame de demande de balise sert à indiquer qu'un dispositif est situé dans une zone d'interférence entre une zone d'un premier réseau dans laquelle se trouve le coordinateur et une zone d'au moins un second réseau ; et
l'envoi (704), par le coordinateur, de deux balises dans chacune de N super trames en commençant par une super trame suivante, dans lequel les deux balises occupent le premier créneau temporel de balise et un second créneau temporel de balise dans chacune des N super trames, N ≥ 1 et N est un entier positif.

2. Procédé selon la revendication 1, dans lequel :
le premier créneau temporel de balise est situé dans une zone de créneau temporel de balise de la super trame, et le second créneau temporel de balise est situé dans une zone de période exempte de collision, CFP, de la super trame.

3. Procédé selon la revendication 1 ou 2, dans lequel :
un type de balise de la balise envoyée dans le premier créneau temporel de balise est une balise originale ;
un type de balise de la balise envoyée dans le second créneau temporel de balise est une balise supplémentaire ; et
la balise originale sert à indiquer que la balise est une balise envoyée régulièrement et de manière classique par le coordinateur, et la balise supplémentaire sert à indiquer que la balise est une balise supplémentaire envoyée par le coordinateur autre que la balise originale.

4. Procédé selon la revendication 3, après que le coordinateur envoie les deux balises dans chacune de N super trames en commençant par une super trame suivante, le procédé comprenant en outre :
l'établissement (707), par le coordinateur, d'une association avec le dispositif si le coordinateur reçoit une trame de demande d'association envoyée par le dispositif, et une durée d'occupation des N super trames n'atteint pas un seuil spécifié.

5. Procédé selon l'une quelconque des revendications 1 à 4, dans lequel la trame de demande de balise transporte un champ qui indique une adresse du dispositif.

6. Procédé selon la revendication 5, dans lequel la trame de demande de balise transporte en outre au moins l'un d'un champ indiquant une raison de la demande, d'un champ indiquant un numéro de séquence d'envoi de la trame de demande de balise, d'un champ indiquant un nombre de retransmissions de la trame de demande de balise et d'un champ indiquant une adresse d'un coordinateur d'accès cible.

7. Procédé selon l'une quelconque des revendications 1 à 6, dans lequel le premier réseau est un VPAN compatible avec les balises.

8. Produit de programme informatique, comprenant des instructions de programme informatique qui, lorsqu'elles sont exécutées par une unité informatique, vont amener l'unité informatique à exécuter le procédé selon l'une quelconque des revendications 1 à 7.

9. Appareil d'envoi de balise dans un réseau personnel de communication par lumière visible, VPAN, comprenant :
une unité d'envoi (1101), configurée pour envoyer une balise, dans lequel la balise occupe un premier créneau temporel de balise dans une super trame en cours ; et
une unité de réception (1102), configurée pour recevoir une trame de demande de balise après que l'unité d'envoi envoie la balise, dans lequel la trame de demande de balise sert à indiquer qu'un dispositif est situé dans une zone d'interférence entre une zone du premier réseau dans laquelle se trouve l'appareil d'envoi de balise et une zone d'au moins un second réseau, dans lequel
l'unité d'envoi est configurée pour : après que l'unité de réception reçoit la trame de demande de balise, envoyer deux balises dans chacune de N super trames en commençant par une super trame suivante, dans lequel les deux balises occupent le premier créneau temporel de balise et un second créneau temporel de balise dans chacune des N super trames, N ≥ 1 et N est un entier positif.

10. Appareil selon la revendication 9, dans lequel :
le premier créneau temporel de balise est situé dans une zone de créneau temporel de balise de la super trame, et le second créneau temporel de balise est situé dans une zone de période exempte de collision, CFP, de la super trame.

11. Appareil selon la revendication 9 ou 10, dans lequel :
un type de balise de la balise envoyée dans le premier créneau temporel de balise est une balise originale ;
un type de balise de la balise envoyée dans le second créneau temporel de balise est une balise supplémentaire ; et
la balise originale sert à indiquer que la balise est une balise envoyée régulièrement et de manière classique, et la balise supplémentaire sert à indiquer que la balise est une balise supplémentaire autre que la balise originale.

12. Appareil selon la revendication 11, comprenant en outre une unité d'association (1103), dans lequel :
l'unité d'association est configurée pour établir une association avec le dispositif s'il est déterminé, lorsque l'unité de réception reçoit une trame de demande d'association envoyée par le dispositif, qu'une durée d'occupation des N super trames n'atteint pas un seuil spécifié.

13. Appareil selon l'une quelconque des revendications 9 à 12, dans lequel la trame de demande de balise transporte un champ qui indique une adresse du dispositif.

14. Appareil selon la revendication 13, dans lequel la trame de demande de balise transporte au moins l'un d'un champ indiquant une raison de la demande, d'un champ indiquant un numéro de séquence d'envoi de la trame de demande de balise, d'un champ indiquant un nombre de retransmissions de la trame de demande de balise et d'un champ indiquant une adresse d'un coordinateur d'accès cible.

15. Appareil selon l'une quelconque des revendications 9 à 14, l'appareil étant un coordinateur dans un VPAN compatible avec les balises.
